# EUROPÄISCHE PATENTSCHRIFT

(11) **EP 4 024 156 B1**
(45) Veröffentlichungstag und Bekanntmachung des Hinweises auf die Patenterteilung: **03.04.2024**
(21) Anmeldenummer: 21211639.6
(22) Anmeldetag: 01.12.2021
(51) Int. Cl.: G05D 9/12

(54) **VERFAHREN ZUM PUFFERN EINES STERILISIERTEN FLÜSSIGEN PRODUKTS UND ABFÜLLANLAGE**
METHOD FOR BUFFERING A STERILIZED LIQUID PRODUCT AND FILLING SYSTEM
PROCÉDÉ DE STOCKAGE TAMPON D'UN PRODUIT LIQUIDE STÉRILISÉ ET INSTALLATION DE REMPLISSAGE

(30) Priorität: 04.01.2021 DE 102021100003
(43) Veröffentlichungstag der Anmeldung: 06.07.2022
(73) Patentinhaber: Krones AG, 93073 Neutraubling (DE)
(72) Erfinder: AMANN, Roland, 93073 Neutraubling (DE); MUEHLBAUER, Juergen, 93073 Neutraubling (DE); WANAT, Manuel, 93073 Neutraubling (DE); RAUCH, Matthias, 93073 Neutraubling (DE); ENZMANN, Katja, 93073 Neutraubling (DE)
(74) Vertreter: Grünecker Patent- und Rechtsanwälte PartG mbB

(56) Entgegenhaltungen:
- EP-A1- 0 965 075
- WO-A1-2011/143782
- JP-A- S6 175 907

## Beschreibung

Die Erfindung betrifft ein Verfahren zum Puffern eines mittels Durchlauferhitzung / -heißhaltung sterilisierten flüssigen Produkts gemäß dem Oberbegriff des Anspruchs 1 und eine Abfüllanlage gemäß dem Oberbegriff des Anspruchs 12.

Gattungsgemäße Verfahren und Abfüllanlagen sind beispielsweise aus der EP 2 897 871 B1 und JPH 09-10286 A bekannt. Beschrieben wird jeweils eine Leistungsregelung einer Kurzzeiterhitzungseinheit mit nachgeschaltetem Puffertank und Füller in Abhängigkeit von einer Füllstandmessung im Puffertank.

Die EP 0 965 075 A1 offenbart zudem eine Abfüllanlage, bei der einem Puffertank ein Produktmischer vorgeschaltet ist. Die Anlage umfasst ferner einen Füller und einen Füllstandwächter mit einer Regelung, die den eingangsseitigen Volumenstrom eines Produkts in den Puffertank in Abhängigkeit vom dortigen Füllstand regeln kann. Hierfür wird der eingangsseitige Volumenstrom mit einem Durchflussmesser kontinuierlich überwacht und die Maschinenleistung des vorgeschalteten Produktmischers nachgeregelt. Außerdem wird der ausgangsseitige Volumenstrom des Produkts aus dem Puffertank aus dem überwachten eingangsseitigem Volumenstrom und dem überwachten Füllstand berechnet und der Sollwert für den Füllstand an den jeweiligen ausgangsseitigen Volumenstrom angepasst wird. Die Maschinenleistung des vorgeschalteten Produktmischers wird hierbei angepasst, um den Ist-Wert des Füllstands an den vom ausgangsseitigen Volumenstrom abhängigen Soll-Füllstand anzugleichen.

Nachteilig ist insbesondere bei vergleichsweise großem Querschnitt des Puffertanks, dass sich der Füllstand bei Änderungen des eingangsseitigen Volumenstroms und/oder des ausgangsseitigen Volumenstroms nur vergleichsweise langsam ändert und daher die Genauigkeit derartiger Messungen zur Beurteilung von Volumenänderungen oder der jeweils verfügbareren Ist-Pufferkapazität entsprechend eingeschränkt ist.

Da man so nur verzögert auf Abnahmeschwankungen seitens des Füllers reagieren kann, ist die Regelung der Abfüllanlage in diesem Bereich insgesamt unerwünscht träge. Es muss daher ein gewisser Sicherheitspuffer eingeplant werden, was wiederum die bei einem bestimmten Mindestvolumenstrom durch die vorgeschaltete Kurzzeiterhitzungseinheit maximal mögliche Pufferzeit im Puffertank reduziert.

Es besteht daher Bedarf für diesbezüglich verbesserte Verfahren zum Puffern eines mittels Durchlauferhitzung / -heißhaltung sterilisierten Produkts in einem Puffertank und für entsprechend verbesserte Abfüllanlagen, also im Sinne einer besseren Ausnutzung des Puffertankvolumens.

Die gestellte Aufgabe wird mit einem Verfahren gemäß Anspruch 1 und mit einer Abfüllanlage gemäß Anspruch 12 gelöst.

Eine bevorzugte Ausführungsform der Erfindung ist zeichnerisch dargestellt. Es zeigen:
- Figur 1: eine schematische Darstellung der Abfüllanlage; und
- Figur 2: ein schematisches Ablaufdiagramm des Verfahrens.

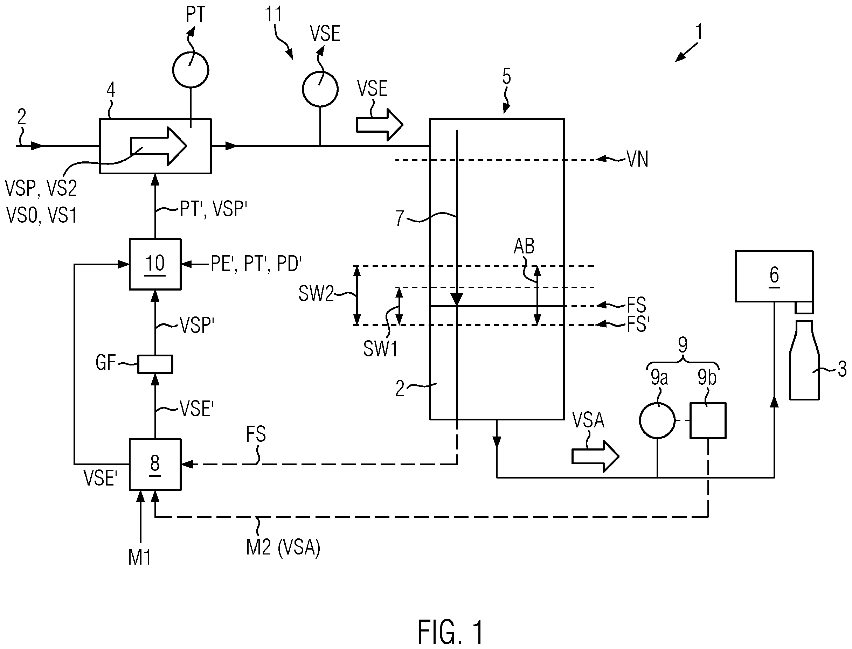

Wie die Figur 1 erkennen lässt, umfasst die Abfüllanlage 1 zum Sterilisieren und Puffern eines flüssigen Produkts 2 sowie zu dessen Abfüllung in Flaschen 3, Dosen oder vergleichbare Behälter eine Kurzzeiterhitzungseinheit 4 zur prinzipiell bekannten Durchlauferhitzung/ -heißhaltung des Produkts 2, einen nachgeschalteten Puffertank 5 für das derart sterilisierte Produkt 2 und einen wiederum nachgeschalteten Füller 6 zum Abfüllen des Produkts 2.

Der Puffertank 5 umfasst einen prinzipiell bekannten Füllstandwächter 7 und eine erste elektronische Regeleinrichtung 8 zur füllstandabhängigen Anpassung eines eingangsseitigen Volumenstroms VSE des Produkts 2 in den Puffertank 5, was nachfolgend der Übersichtlichkeit halber auch als Füllstandregelung bezeichnet wird. Darunter ist zu verstehen, dass der eingangsseitige Volumenstrom VSE angepasst wird, um den Ist-Füllstand FS des Produkts 2 möglichst an einen vorzugsweise sortenspezifisch vorgegebenen Soll-Füllstand FS` im Puffertank 5 anzugleichen.

Ferner ist ein erster Durchflusswächter 9 zur Ermittlung eines ausgangsseitigen Volumenstroms VSA des Produkts 2 aus dem Puffertank 5 vorhanden.

Die erste Regeleinrichtung 8 ist derart ausgebildet und programmiert, dass der eingangsseitige Volumenstrom VSE innerhalb eines vorgegebenen Arbeitsbereichs AB des Ist-Füllstands FS des Produkts 2 auch in Abhängigkeit vom ausgangsseitigen Volumenstrom VSA verändert werden kann. Zu diesem Zweck kann in der ersten Regeleinrichtung 8 ein Sollwert VSE' des eingangsseitigen Volumenstroms VSE in Abhängigkeit vom Ist-Füllstand FS und vom ausgangsseitigen Volumenstroms VSA berechnet werden.

Die Kurzzeiterhitzungseinheit 4 umfasst eine zweite elektronische Regeleinrichtung 10 zur Durchflussregelung und/oder Temperaturregelung der Durchlauferhitzung/ -heißhaltung des Produkts 2. Hierzu kann die zweite Regeleinrichtung 10 auf der Grundlage des Sollwerts VSE' des eingangsseitigen Volumenstroms VSE eine Soll-Pasteurisierungstemperatur PT' und/oder einen Soll-Pasteurisierungsvolumenstrom VSP` des Produkts 2 berechnen oder einen sortenabhängigen Soll-Pasteurisierungsvolumenstrom VSP' insbesondere auch unabhängig von der Pufferung des Produkts 2 vorgeben, wie nachfolgend noch für drei grundlegende Regelungsmodi RM1, RM2, RM3 der zweiten Regeleinrichtung 10 beschrieben wird.

Die zweite Regeleinrichtung 10 ist demnach derart ausgebildet und programmiert, dass sie den Soll-Pasteurisierungsvolumenstrom VSP' entweder bei vorgegebenem Soll-Pasteurisierungsgrad PE` oder vorgegebener Soll-Pasteurisierungstemperatur PT' des Produkts 2 mithilfe des Sollwerts VSE' des eingangsseitigen Volumenstroms VSE berechnet oder davon unabhängig bei vorgegebener Soll-Pasteurisierungsdauer PD` sortenspezifisch einstellt.

Der erste Durchflusswächter 9 zur Ermittlung des ausgangsseitigen Volumenstroms VSA umfasst vorzugsweise einen zwischen dem Puffertank 5 und dem Füller 6 angeordneten Durchflussmesser 9a und eine zugehörige Auswerteeinheit 9b, die beispielsweise zur zeitlichen Mittelung des gemessenen ausgangsseitigen Volumenstroms VSA ausgebildet ist.

Dargestellt ist ferner ein zweiter Durchflusswächter 11 zur Ermittlung des eingangsseitigen Volumenstroms VSE, der auf prinzipiell gleiche Weise arbeiten und alternativ (anstelle des ersten Durchflusswächters 9) in Kombination mit dem Füllstandwächter 7 dazu eingesetzt werden kann, den ausgangsseitigen Volumenstrom VSA aus dem jeweils überwachten eingangsseitigen Volumenstrom VSE und Ist-Füllstand FS zu berechnen.

Dargestellt ist in der Figur 1 ferner ein Soll-Füllstand FS`, der beispielsweise sortenspezifisch je nach Produkt 2 und/oder Typ der Flaschen 3 in der ersten Regeleinrichtung 8 vorgegeben werden kann. Es wird dann beispielsweise mit Hilfe des Füllstandwächters 7 gemessen und ausgewertet, um wieviel der Ist-Füllstands FS vom jeweiligen Sollfüllstands FS' abweicht. In Abhängigkeit von der festgestellten Abweichung kann dann in der ersten Regeleinrichtung 8 ein Multiplikator M1 ausgewählt werden, der zur Berechnung des Sollwerts VSE' des eingangsseitigen Volumenstroms VSE dient.

In die Berechnung des Sollwerts VSE' geht dann ferner ein Multiplikand M2 ein, der durch zeitliche Mittelung des gemessenen ausgangsseitigen Volumenstroms VSA insbesondere durch gleitende Mittelwertbildung berechnet wird. Die Mittelung erfolgt dann beispielsweise über einen Zeitraum von 10 bis 200 s, insbesondere von 30 bis 100 s. Dadurch lassen sich ausgangsseitige Schwankungen durch unterschiedliche Abnahme des Produkts 2 im Bereich des Füllers 6 berücksichtigen bzw. kompensierend glätten.

Im einfachsten Fall ergibt sich der Sollwert VSE' des eingangsseitigen Volumenstroms VSE aus der Multiplikation M1 * M2. Das heißt, der Sollwert VSE' wird in Relation zum insbesondere zeitlich gemittelten ausgangsseitigen Volumenstrom VSA festgelegt und kann von der zweiten Regeleinrichtung 10 der Kurzzeiterhitzungseinheit 4 für deren Temperaturregelung und/oder Durchflussregelung übernommen werden, also zur Berechnung der Soll-Pasteurisierungstemperatur PT` und/oder des Soll-Pasteurisierungsvolumenstroms VSP`.

Der Multiplikator M1 kann je nach Ist-Füllstand FS unterschiedliche Werte annehmen. Der Multiplikator M1 beträgt beispielsweise 0,9 bis 1,1, bevorzugt 1, wenn der Ist-Füllstand FS so groß ist wie der Soll-Füllstand FS' oder diesen bis zu einem ersten Schwellenwert SW1 übersteigt. Zudem kann der Multiplikator M1 0,5 bis 0,9, bevorzugt das 0,75 bis 0,85-Fache betragen, wenn der Ist-Füllstand FS den Soll-Füllstand FS' um wenigstens den ersten Schwellenwert SW1 und höchsten um einen zweiten (höheren) Schwellenwert SW2 übersteigt.

Die Schwellenwerte SW1, SW2 werden vorzugsweise relativ zu einem Nennvolumen VN des Puffertanks 5 festgelegt. Der erste Schwellenwert SW1 beträgt beispielsweise 0,5 bis 2% des Nennvolumens VN des Puffertanks 5, der zweite Schwellenwert SW2 beträgt beispielsweise 4 bis 8% des Nennvolumens VN.

Entsprechende absolute Füllstandschwellenwerte ergeben sich somit aus der Addition des jeweiligen Soll-Füllstands FS' und der wie oben definierten Schwellenwerte SW1, SW2. In Analogie dazu könnten auch weitere derartige Schwellenwerte verwendet werden oder nur einer der Schwellenwerte SW1, SW2.

Wie die Figur 1 ferner schematisch erkennen lässt, erstreckt sich der Arbeitsbereich AB vorzugsweise zwischen dem jeweiligen Soll-Füllstand FS' und dem jeweils größten Schwellenwert, im gezeigten Beispiel dem zweiten Schwellenwert SW2.

Außerhalb des Arbeitsbereichs AB kann der Sollwert VSE' des eingangsseitigen Volumenstroms VSE unabhängig vom ausgangsseitigen Volumenstrom VSA festgelegt werden.

Liegt der Ist-Füllstand FS beispielsweise oberhalb des zweiten Schwellenwerts SW2, so wird vorzugsweise ein vorgegebener Mindestvolumenstrom VS0 der Durchlauferhitzung/ -heißhaltung als Sollwert VSE' des eingangsseitigen Volumenstroms VSE ausgewählt.

Liegt der Ist-Füllstand FS unterhalb des Soll-Füllstands FS`, wird vorzugsweise ein Nennvolumenstrom VS1 der Durchlauferhitzung/ -heißhaltung als Sollwert VSE' des eingangsseitigen Volumenstroms VSE ausgewählt.

In der zweiten Regeleinrichtung 10 der Kurzzeiterhitzungseinheit 4 ist vorzugsweise ferner ein Maximalvolumenstrom VS2 der Durchlauferhitzung/ -heißhaltung gespeichert, über den der Soll-Pasteurisierungsvolumenstrom VSP' regelungsbedingt nicht ansteigen kann.

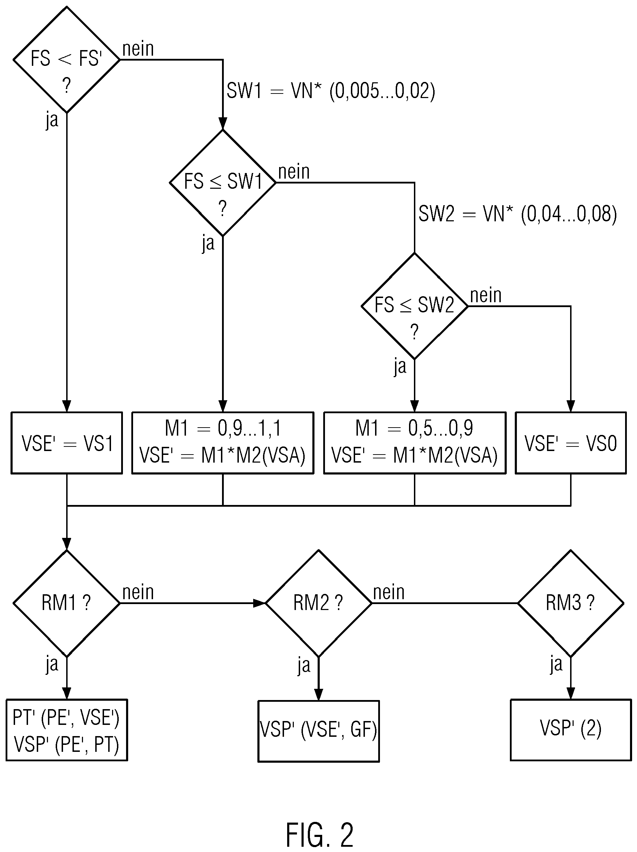

Die zweite Regeleinrichtung 10 ermöglicht vorzugsweise drei unterschiedliche Regelungsmodi RM1, RM2, RM3 (siehe Figur 2) für die Kurzzeiterhitzungseinheit 4, nämlich einen ersten Regelungsmodus RM1 zur Einhaltung eines festgelegten Soll-Pasteurisierungsgrads PE`, einen zweiten Regelungsmodus RM2 zur Einhaltung einer festgelegten Soll-Pasteurisierungstemperatur PT' und/oder einen dritten Regelungsmodus RM3 zur Einhaltung einer festgelegten Soll-Pasteurisierungsdauer PD`.

Beim ersten Regelungsmodus RM1 mit einer Regelung auf Soll-Pasteurisierungsgrad PE` wird zunächst der in der ersten Regeleinrichtung 8 des Puffertanks 5 berechnete Sollwerts VSE' des eingangsseitigen Volumenstroms VSE übernommen.

Die zweite Regeleinrichtung 10 errechnet daraus eine zum Soll-Pasteurisierungsgrad PE` passende Soll-Pasteurisierungstemperatur PT` zur Temperaturregelegung der Kurzzeiterhitzungseinheit 4.

Aus einer im Bereich der Kurzzeiterhitzungseinheit 4 auf prinzipiell bekannte Weise gemessenen Ist-Pasteurisierungstemperatur PT wird dann ein dazu passender Volumenstrom berechnet, mit dem wenigstens der geforderte Pasteurisierungsgrad PE` erreicht wird, und als Soll-Pasteurisierungsvolumenstrom VSP` zur Durchflussregelung der Kurzzeiterhitzungseinheit 4 verwendet, also zur laufenden Anpassung eines Ist-Pasteurisierungsvolumenstroms VSP durch die Kurzzeiterhitzungseinheit 4.

Die vergleichsweise flinke Durchflussregelung ermöglicht eine laufende und präzise Anpassung des Ist-Pasteurisierungsvolumenstroms VSP zum Einhalten des Soll-Pasteurisierungsgrads PE` je nach herrschender Ist-Pasteurisierungstemperatur PT.

Im Anschluss kann die Soll-Pasteurisierungstemperatur PT' laufend an die Erfordernisse im Bereich des Puffertanks 5, also in Abhängigkeit vom Sollwert VSE' des eingangsseitigen Volumenstroms VSE angepasst werden.

Das heißt, die Temperaturregelung der Kurzzeiterhitzungseinheit 4 folgt der Füllstandsregelung der ersten Regeleinrichtung 8, die Durchflussregelung der Kurzzeiterhitzungseinheit 4 folgt ihrer Temperaturregelung.

Hierbei wird der Ist-Pasteurisierungsgrad PE des Produkts 2 mittels Durchflussregelung vergleichsweise flink an den jeweiligen Soll-Pasteurisierungsgrad PE' des Produkts 2 angepasst und somit die Behandlungsqualität hergestellt.

Dies ermöglicht eine zuverlässig ordnungsgemäße Sterilisierung des Produkts 2 und eine effektive Ausnutzung des Puffertanks 5, um stets einen möglichst großen Anteil seines Nennvolumens VN zur Pufferung des Produkts 2 zur Verfügung zu stellen.

Beim zweiten Regelungsmodus RM2 der Kurzzeiterhitzungseinheit 4 mit fest vorgegebener Soll-Pasteurisierungstemperatur PT' wird der Sollwert VSE' des eingangsseitigen Volumenstroms VSE über eine insbesondere sortenspezifische Glättungsfunktion GF in den Soll-Pasteurisierungsvolumenstrom VSP' überführt. Das heißt, vergleichsweise kurzfristige Schwankungen des Sollwerts VSE' wirken sich nur abgeschwächt und zeitlich versetzt auf den Soll-Pasteurisierungsvolumenstrom VSP' aus, um ein zu flinkes Reagieren der Durchflussregelung der Kurzzeiterhitzungseinheit 4 im Vergleich zu deren trägerer Temperaturregelung zu vermeiden.

Zu diesem Zweck umfasst die Glättungsfunktion GF vorzugsweise eine maximale relative Flankensteilheit, also eine maximale relative Änderung des Soll-Pasteurisierungsvolumenstroms VSP` pro Zeiteinheit. Beispielsweise beträgt die relative Flankensteilheit der Glättungsfunktion GF maximal 0,5 % des Nennvolumenstroms VS1 der Durchlauferhitzung/ -heißhaltung und insbesondere maximal 0,3 % davon. Dadurch lässt sich vor allem vermeiden, dass im zweiten Regelungsmodus RM2 ein geforderter minimaler Soll-Pasteurisierungsgrad PE` durch zu schnelles Absenken (Nachführen) des Soll-Pasteurisierungsvolumenstroms VSP' unterschritten wird.

Im dritten Regelungsmodus RM3 mit fest vorgegebener Soll-Pasteurisierungsdauer PD' wird der Soll-Pasteurisierungsvolumenstrom VSP' sortenspezifisch, also abhängig vom Produkt 2 von der zweite Regeleinrichtung 10 der Kurzzeiterhitzungseinheit 4 ausgewählt und dann vorzugsweise nicht an den Sollwert VSE' des eingangsseitigen Volumenstroms VSE angepasst.

Die oben genannten Regelungsmodi RM1, RM2, RM3 könnten für unterschiedliche Produkte 2 und/oder Betriebssituationen wahlweise aktiviert werden.

Grundlagen der voranstehend beschriebenen Füllstandregelung für den Puffertank 5 und der Temperatur- sowie Durchflussregelung für die Kurzzeiterhitzungseinheit 4 sind zum besseren Verständnis zusätzlich anhand der Fig. 2 schematisch und beispielhaft als Ablaufdiagramm unter Verwendung entsprechender Bezugszeichen erläutert. Einige Größen sind als Funktion dahinter in Klammern gesetzter Parameter oder Wertebereiche angegeben.

Bei den beschriebenen Regelungsvarianten wird jeweils vorausgesetzt, dass die Produktleitungen der Kurzzeiterhitzungseinheit 4 und die Verbindungsleitung zum Puffertank 5 vollständig mit dem Produkt 2 gefüllt sind und dieses auf prinzipiell bekannte Weise in den Puffertank 5 gepumpt wird.

Die Kurzeiterhitzungseinheit 4 ist entsprechend für einen kontinuierlichen Durchstrom des Produkts 2 im Sterilisierungsbetrieb ausgebildet.

Der erste Regelungsmodus RM1 zur Regelung auf einen Soll-Pasteurisierungsgrad PE' ist besonders flexibel einsetzbar zugunsten einer möglichst genauen Einhaltung der geforderten Produktqualität und einer effizienten Ausnutzung des Puffertanks 5 im Sinne einer maximierten Pufferzeit für den Fall einer reduzierten oder unterbrochenen Abnahme des Produkts 2 durch den Füller 6. Je nach Produkt 2 und/oder bestimmten Betriebssituationen kann der zweite oder dritte Regelungsmodus RM2, RM3 gezielt eingesetzt werden.

Die beschriebene Füllstandregelung für den Puffertank 5 unter zusätzlicher Berücksichtigung des ausgangsseitigen Volumenstroms VSA innerhalb des Arbeitsbereichs AB ermöglicht eine besonders exakte Anpassung des Ist-Füllstands FS während des regulären Abfüllbetriebs, so dass bei einer gegebenenfalls reduzierten Produktabnahme durch den Füller 6 stets ein möglichst großes Restvolumen des Puffertanks 5 für eine anschließende Pufferung des aus der Kurzzeiterhitzungseinheit 4 nachgelieferten Produkts 2 zur Verfügung steht. Dies dient auch einem möglichst konstanten Betrieb der vorgeschalteten Kurzzeiterhitzungseinheit 4.

Bei Erreichen eines maximalen Füllstands des Produkts 2 im Puffertank 5, wäre das Produkt 2 beispielsweise auf an sich bekannte Weise vor/aus dem Puffertank 5 in einen Rückführkreislauf abzuzweigen.

Aufgrund der beschriebenen Regelungsmodi RM1, RM2, RM3 der Kurzzeiterhitzungseinheit 4 und der beschriebenen Füllstandregelung am Puffertank 5 lassen sich unterschiedliche Produkte 2 mit den erforderlichen Pasteurisierungseinheiten unter Maximierung der Pufferkapazität des Puffertanks 5 behandeln.

## Patentansprüche

1. Verfahren zum Puffern eines mittels Durchlauferhitzung/ -heißhaltung in einer Kurzzeiterhitzungseinheit (4) sterilisierten Produkts (2) in einem dieser nachgeschalteten Puffertank (5) vor Abfüllung des Produkts in Flaschen (3), Dosen oder dergleichen Behälter in einem dem Puffertank nachgeschalteten Füller (6), wobei ein Ist-Füllstand (FS) des Produkts im Puffertank überwacht und ein eingangsseitiger Volumenstrom (VSE) des Produkts in den Puffertank in Abhängigkeit vom Ist-Füllstand geregelt wird, wobei in einer programmierten Regeleinheit (8) ein ausgangsseitiger Volumenstrom (VSA) des Produkts aus dem Puffertank überwacht und der eingangsseitige Volumenstrom innerhalb wenigstens eines vorgegebenen Arbeitsbereichs (AB) des Ist-Füllstands ferner in Abhängigkeit vom ausgangsseitigen Volumenstrom geregelt und hierfür ein Sollwert (VSE`) des eingangsseitigen Volumenstroms in Abhängigkeit vom Ist-Füllstand (FS) und vom ausgangsseitigen Volumenstrom (VSA) berechnet wird, und dass aus dem Sollwert (VSE`) des eingangsseitigen Volumenstroms (VSE) und einem Soll-Pasteurisierungsgrad (PE`) eine Soll-Pasteurisierungstemperatur (PT`) zur Temperaturregelung der Durchlauferhitzung/ -heißhaltung berechnet wird, wobei in Abhängigkeit von einer im Bereich der Durchlauferhitzung/ -heißhaltung herrschenden Ist-Pasteurisierungstemperatur (PT) ein zum Erreichen des Soll-Pasteurisierungsgrads (PE`) erforderlicher Soll-Pasteurisierungsvolumenstrom (VSP`) zur Durchflussregelung der Durchlauferhitzung/ -heißhaltung berechnet wird.

2. Verfahren nach Anspruch 1, wobei eine Abweichung des Ist-Füllstands (FS) von einem insbesondere produktspezifisch vorgegebenen Soll-Füllstand (FS`) ermittelt wird und abhängig von der Abweichung ein Multiplikator (M1) zur Berechnung eines Sollwerts (VSE`) des eingangsseitigen Volumenstroms (VSE) ausgewählt wird.

3. Verfahren nach Anspruch 2, wobei der ausgangseitige Volumenstrom (VSA) durch Mittelung über einen Zeitraum von 10 s bis 200 s, insbesondere 30 s bis 100 s, berechnet wird und als Multiplikand (M2) in die Berechnung des Sollwerts (VSE`) des eingangsseitigen Volumenstroms (VSE) eingeht.

4. Verfahren nach Anspruch 2 oder 3, wobei das 0,9-Fache bis 1,1-Fache, insbesondere das 1-Fache des ausgangsseitigen Volumenstroms (VSA) als Sollwert (VSE`) des eingangsseitigen Volumenstroms (VSE) vorgegeben wird, wenn der Ist-Füllstand (FS) so groß ist wie der Soll-Füllstand (FS`) oder diesen bis zu einem ersten Schwellenwert (SW1) übersteigt, und wobei das 0,5-Fache bis 0,9-Fache, insbesondere das 0,75-Fache bis 0,85-Fache des ausgangsseitigen Volumenstroms als Sollwert des eingangsseitigen Volumenstroms vorgegeben wird, wenn der Ist-Füllstand den Soll-Füllstand um wenigstens den ersten Schwellenwert und höchstens um einen zweiten Schwellenwert (SW2) übersteigt.

5. Verfahren nach Anspruch 4, wobei ein Mindestvolumenstrom (VS0) der Durchlauferhitzung / -heißhaltung vorgegeben ist und maschinell als Sollwert (VSE`) des eingangsseitigen Volumenstroms (VSE) ausgewählt wird, wenn der Ist-Füllstand (FS) den Soll-Füllstand (FS`) um mehr als den zweiten Schwellenwert (SW2) übersteigt.

6. Verfahren nach Anspruch 4 oder 5, wobei der erste Schwellenwert (SW1) 0,5 bis 2% des Nennvolumens (NV) des Puffertanks (5) beträgt, und/oder wobei der zweite Schwellenwert (SW2) 4 bis 8% des Nennvolumens des Puffertanks beträgt.

7. Verfahren nach einem der Ansprüche 2 bis 6, wobei ein Nennvolumenstrom (VS1) der Durchlauferhitzung/ -heißhaltung vorgegeben ist und maschinell als Sollwert (VSE`) des eingangsseitigen Volumenstroms (VSE) ausgewählt wird, wenn der Ist-Füllstand (FS) kleiner ist als der Soll-Füllstand (FS`).

8. Verfahren nach wenigstens einem der Ansprüche 1 bis 7, wobei der Soll-Pasteurisierungsgrad (PE`) sortenspezifisch vorgegeben wird.

9. Verfahren nach wenigstens einem der Ansprüche 2 bis 7, wobei ein Soll-Pasteurisierungsvolumenstrom (VSP`) der Durchlauferhitzung/ -heißhaltung unter Vorgabe einer Soll-Pasteurisierungstemperatur (PT') an den Sollwert des eingangsseitigen Volumenstroms (VSE`) mittels einer insbesondere sortenspezifischen Glättungsfunktion (GF) angeglichen wird.

10. Verfahren nach Anspruch 9, wobei die Glättungsfunktion (GF) ein zeitliches Regelverhalten zur Temperaturregelung der Durchlauferhitzung /-heißhaltung nachbildet, insbesondere mit einer maximalen relativen Flankensteilheit von 0,5% pro Sekunde, und insbesondere 0,3% pro Sekunde, bezogen auf einen Nennvolumenstrom (VS1) der Durchlauferhitzung / -heißhaltung.

11. Verfahren nach wenigstens einem der Ansprüche 2 bis 7, wobei ein Soll-Pasteurisierungsvolumenstrom (VSP`) der Durchlauferhitzung / -heißhaltung unter Vorgabe einer Soll-Pasteurisierungsdauer (PD`) unabhängig vom Sollwert des eingangsseitigen Volumenstroms (VSE`) sortenspezifisch vorgegeben wird.

12. Abfüllanlage (1) umfassend: eine Kurzzeiterhitzungseinheit (4) zur Sterilisierung eines Produkts (2) im Durchlauf; einen Füller (6) zur Abfüllung des Produkts in Flaschen (3), Dosen oder dergleichen Behälter; und einen zwischengeschalteten Puffertank (5) mit einem Füllstandwächter (7) und einer ersten Regeleinrichtung (8) zur füllstandabhängigen Anpassung eines eingangsseitigen Volumenstroms (VSE) des Produkts in den Puffertank, wobei eine Einrichtung zur Ermittlung eines ausgangsseitigen Volumenstroms (VSA) des Produkts aus dem Puffertank vorhanden ist und die erste Regeleinrichtung ferner dazu ausgebildet ist, den eingangsseitigen Volumenstrom (VSE) innerhalb wenigstens eines vorgegebenen Arbeitsbereichs (AB) des Ist-Füllstands (FS) des Produkts in Abhängigkeit vom ausgangsseitigen Volumenstrom (VSA) gemäß dem Verfahren nach wenigstens einem der vorigen Ansprüche zu regeln und hierfür einen Sollwert (VSE`) des eingangsseitigen Volumenstroms (VSE) in Abhängigkeit vom Ist-Füllstand (FS) und vom ausgangsseitigen Volumenstrom (VSA) zu berechnen, wobei die Kurzzeiterhitzungseinheit (4) eine zweite Regeleinrichtung (10) zur Durchflussregelung der Sterilisierung umfasst, um den berechneten Sollwert (VSE`) des eingangsseitigen Volumenstroms (VSE) insbesondere mittels einer zeitlichen Glättungsfunktion (GF) zu übernehmen und daraus einen Soll-Pasteurisierungsvolumenstrom (VSP`) des Produkts (2) in der Kurzzeiterhitzungseinheit zu berechnen.

13. Abfüllanlage nach Anspruch 12, wobei die zweite Regeleinrichtung (10) ferner zur Temperaturregelung der Sterilisierung ausgebildet ist, um den berechneten Sollwert (VSE`) des eingangsseitigen Volumenstroms (VSE) insbesondere mittels einer zeitlichen Glättungsfunktion (GF) zu übernehmen und daraus eine Soll-Pasteurisierungstemperatur (PT') des Produkts (2) in der Kurzzeiterhitzungseinheit zu berechnen.

14. Abfüllanlage nach Anspruch 12 oder 13, wobei die Einrichtung zur Ermittlung des ausgangsseitigen Volumenstroms ein Durchflusswächter (9) mit einem zwischen dem Puffertank (5) und dem Füller (6) angeordneten Durchflussmesser (9a) ist.

15. Abfüllanlage nach wenigstens einem der Ansprüche 12 bis 14, wobei der Puffertank (5) ein Nennvolumen von 5 bis 30 m³ aufweist.

## Claims

1. A method for buffering a product (2) sterilized by means of continuous-flow heating/heat retention in a flash heating unit (4) in a buffer tank (5) connected downstream thereof before filling the product into bottles (3), cans or similar containers in a filler (6) connected downstream of the buffer tank, wherein an actual fill level (FS) of the product in the buffer tank is monitored and an input-side volume flow (VSE) of the product into the buffer tank is regulated as a function of the actual fill level, wherein in a programmed control unit (8) an output-side volume flow (VSA) of the product from the buffer tank is monitored and the input-side volume flow within at least one predetermined operating range (AB) of the actual fill level is also controlled as a function of the output-side volume flow and for this a set value (VSE') of the input-side volume flow is calculated as a function of the actual fill level (FS) and of the output-side volume flow (VSA), and that a set pasteurization temperature (PT') is calculated from the set value (VSE') of the input-side volume flow (VSE) and a set pasteurization level (PE') for temperature control of the continuous-flow heating/heat retention, wherein a set pasteurization volume flow (VSP') required to achieve the set pasteurization degree (PE') is calculated as a function of an actual pasteurization temperature (PT) prevailing in the area of the continuous-flow heating/heat retention for flow control of the continuous-flow heating/heat retention.

2. The method according to claim 1, wherein a deviation of the actual fill level (FS) from a set fill level (FS') predetermined in particular for a specific product, is obtained and a multiplier (M1) for calculating a set value (VSE') of the input-side volume flow (VSE) is selected as a function of the deviation.

3. The method according to claim 2, wherein the output-side volume flow (VSA) is calculated by averaging over a period of 10 s to 200 s, in particular 30 s to 100 s, and is included as a multiplicand (M2) in the calculation of the set value (VSE') of the input-side volume flow (VSE).

4. The method according to claim 2 or 3, wherein 0.9 times to 1.1 times, in particular 1 time, the output-side volume flow (VSA) is specified as the set value (VSE') of the input-side volume flow (VSE) in case the actual fill level (FS) is as high as the set fill level (FS') or exceeds it up to a first threshold value (SW1), and wherein 0.5 times to 0.9 times, in particular 0.75 times to 0.85 times, the output-side volume flow is specified as the set value of the input-side volume flow in case the actual fill level exceeds the set fill level by at least the first threshold value and at most by a second threshold value (SW2).

5. The method according to claim 4, wherein a minimum volume flow (VS0) of the continuous-flow heating/heat retention is predetermined and is automatically selected as the set value (VSE') of the input-side volume flow (VSE) in case the actual fill level (FS) exceeds the set fill level (FS') by more than the second threshold value (SW2).

6. The method according to claims 4 or 5, wherein the first threshold value (SW1) is 0.5 to 2% of the nominal volume (NV) of the buffer tank (5), and/or wherein the second threshold value (SW2) is 4 to 8% of the nominal volume of the buffer tank.

7. The method according to any one of claims 2 to 6, wherein a nominal volume flow (VS1) of the continuous-flow heating/heat retention is predetermined and is automatically selected as the set value (VSE') of the input-side volume flow (VSE) in case the actual fill level (FS) is lower than the set fill level (FS').

8. The method according to at least one of claims 1 to 7, wherein the set pasteurization level (PE') is predetermined for a specific product type.

9. The method according to at least one of claims 2 to 7, wherein a set pasteurization volume flow (VSP') of the continuous-flow heating/heat retention is matched to the set value of the input-side volume flow (VSE') by means of a product-specific smoothing function (GF) under a set pasteurization temperature (PT).

10. The method according to claim 9, wherein the smoothing function (GF) simulates a temporal control behaviour for temperature control of the continuous-flow heating/heat retention, in particular with a maximum relative edge steepness of 0.5% per second, and in particular 0.3% per second, relative to a nominal volume flow (VS1) of the continuous-flow heating/heat retention.

11. The method according to at least one of claims 2 to 7, wherein a set pasteurization volume flow (VSP') of the continuous-flow heating/heat retention is specified according to the product type independently of the set value of the input-side volume flow (VSE'), under a set pasteurization duration (PD').

12. A filling plant (1) comprising a flash heating unit (4) for sterilizing a product (2) in a continuous flow; a filler (6) for filling the product into bottles (3), cans or similar containers; and an intermediate buffer tank (5) with a filling level monitor (7) and a first control device (8) for adjusting an input-side volume flow (VSE) of the product into the buffer tank as a function of the filling level, wherein a device for determining an output-side volume flow (VSA) of the product from the buffer tank is provided and the first control device is further configured for controlling the input-side volume flow (VSE) within at least one predetermined operating range (AB) of the actual fill level (FS) of the product as a function of the output-side volumetric flow (VSA) in accordance with the method according to at least one of the preceding claims and, for calculating a set value (VSE') of the input-side volume flow (VSE) as a function of the actual fill level (FS) and of the output-side volume flow (VSA), wherein the flash heating unit (4) comprises a second control device (10) for flow control of the sterilization in order to adopt the calculated set value (VSE') of the input-side volume flow (VSE), in particular by means of a temporal smoothing function (GF), and to calculate therefrom a set pasteurization volume flow (VSP') of the product (2) in the flash heating unit.

13. The filling plant according to claim 12, wherein the second control device (10) is further configured for temperature control of the sterilization by adopting the calculated set value (VSE') of the input-side volume flow (VSE), in particular by means of a temporal smoothing function (GF), and for calculating a set pasteurization temperature (PT') of the product (2) in the flash heating unit based thereon.

14. The filling plant according to claims 12 or 13, wherein the device for determining the output-side volume flow is a flow monitor (9) with a flow meter (9a) interposed between the buffer tank (5) and the filler (6).

15. The filling plant according to at least one of claims 12 to 14, wherein the buffer tank (5) has a nominal volume of 5 to 30 m³.

## Revendications

1. Procédé de mise en attente d'un produit (2), stérilisé par chauffage/maintien en température ininterrompu dans une unité de chauffage de courte durée (4), dans un réservoir d'attente (5) situé en aval dudit produit avant le versement du produit dans des bouteilles (3), des boîtes ou des récipients similaires au sein d'un remplisseur (6) situé en aval du réservoir d'attente, dans lequel un niveau de remplissage réel (FS) du produit dans le réservoir d'attente est contrôlé et un débit volumétrique côté entrée (VSE) du produit dans le réservoir d'attente est régulé en fonction du niveau de remplissage réel, dans lequel
dans une unité de régulation programmée (8), un débit volumétrique côté sortie (VSA) du produit en provenance du réservoir d'attente est surveillé et le débit volumétrique côté entrée à l'intérieur d'au moins une plage de travail (AB) prédéfinie du niveau de remplissage réel est en outre régulé en fonction du débit volumétrique côté sortie et une valeur de consigne (VSE') du débit volumétrique côté entrée est calculée à cet effet en fonction du niveau de remplissage réel (FS) et du débit volumétrique côté sortie (VSA), et une température de pasteurisation de consigne (PT`) permettant la régulation de température du chauffage/maintien en température ininterrompu est calculée à partir de la valeur de consigne (VSE') du débit volumétrique côté entrée (VSE) et d'un degré de pasteurisation de consigne (PE'), dans lequel un débit volumétrique de pasteurisation de consigne (VSP') permettant la régulation volumétrique du chauffage/maintien en température ininterrompu et nécessaire pour atteindre le degré de pasteurisation de consigne (PE') est calculé en fonction d'une température de pasteurisation réelle (PT) régnant dans la zone de chauffage/maintien en température ininterrompu.

2. Procédé selon la revendication 1, dans lequel un écart entre le niveau de remplissage réel (FS) et un niveau de remplissage de consigne (FS') prédéfini, en particulier spécifique au produit, est déterminé et un multiplicateur (M1) permettant de calculer une valeur de consigne (VSE') du débit volumétrique côté entrée (VSE) est sélectionné en fonction dudit écart.

3. Procédé selon la revendication 2, dans lequel le débit volumétrique côté sortie (VSA) est calculé grâce à une moyenne sur une période comprise entre 10 s et 200 s, en particulier comprise entre 30 s et 100 s, et fait office de multiplicateur (M2) dans le calcul de la valeur de consigne (VSE') du débit volumétrique côté entrée (VSE).

4. Procédé selon la revendication 2 ou 3, dans lequel entre 0,9 fois et 1,1 fois, en particulier 1 fois, le débit volumétrique côté sortie (VSA) est prédéfini en tant que valeur de consigne (VSE') du débit volumétrique côté entrée (VSE) lorsque le niveau de remplissage réel (FS) atteint le niveau de remplissage de consigne (FS') ou dépasse celui-ci jusqu'à une première valeur de seuil (SW1), et dans lequel entre 0,5 fois et 0,9 fois, en particulier entre 0,75 fois et 0,85 fois, le débit volumétrique côté sortie est prédéfini en tant que valeur de consigne du débit volumétrique côté entrée lorsque le niveau de remplissage réel dépasse le niveau de remplissage de consigne à raison d'au moins la première valeur de seuil et d'au plus une deuxième valeur de seuil (SW2).

5. Procédé selon la revendication 4, dans lequel un débit volumétrique minimal (VS0) du chauffage/maintien en température ininterrompu est prédéfini et est sélectionné de manière mécanique comme valeur de consigne (VSE') du débit volumétrique côté entrée (VSE) si le niveau de remplissage réel (FS) dépasse le niveau de remplissage de consigne (FS') à raison de plus de la deuxième valeur de seuil (SW2).

6. Procédé selon la revendication 4 ou 5, dans lequel la première valeur de seuil (SW1) est comprise entre 0,5 et 2 % du volume nominal (NV) du réservoir d'attente (5), et/ou dans lequel la deuxième valeur de seuil (SW2) est comprise entre 4 et 8 % du volume nominal du réservoir d'attente.

7. Procédé selon l'une quelconque des revendications 2 à 6, dans lequel un débit volumétrique nominal (VS1) du chauffage/maintien en température ininterrompu est prédéfini et est sélectionné de manière mécanique comme valeur de consigne (VSE') du débit volumétrique côté entrée (VSE) si le niveau de remplissage réel (FS) est inférieur au niveau de remplissage de consigne (FS').

8. Procédé selon au moins l'une quelconque des revendications 1 à 7, dans lequel le degré de pasteurisation de consigne (PE') est prédéfini en fonction de la variété.

9. Procédé selon au moins l'une quelconque des revendications 2 à 7, dans lequel un débit volumétrique de pasteurisation de consigne (VSP`) du chauffage/maintien en température ininterrompu est ajusté à la valeur de consigne du débit volumétrique côté entrée (VSE') au moyen d'une fonction de lissage (GF) en particulier spécifique à la variété, en spécifiant une température de pasteurisation de consigne (PT').

10. Procédé selon la revendication 9, dans lequel la fonction de lissage (GF) reproduit un comportement de régulation temporelle permettant la régulation de température du chauffage/maintien en température ininterrompu, en particulier avec une pente de flanc relative maximale de 0,5 % par seconde, et en particulier de 0,3 % par seconde, par rapport à un débit volumétrique nominal (VS1) du chauffage/maintien en température ininterrompu.

11. Procédé selon au moins l'une quelconque des revendications 2 à 7, dans lequel un débit volumétrique de pasteurisation de consigne (VSP`) du chauffage/maintien en température ininterrompu est prédéfini de manière spécifique à la variété indépendamment de la valeur de consigne du débit volumétrique côté entrée (VSE') en spécifiant une durée de pasteurisation de consigne (PD').

12. Installation de remplissage (1) comprenant : une unité de chauffage de courte durée (4) permettant de stériliser un produit (2) en continu ; un remplisseur (6) permettant de verser le produit dans des bouteilles (3), des boîtes ou des récipients similaires ; et un réservoir d'attente (5) intermédiaire comprenant un contrôleur de niveau (7) et un premier dispositif de régulation (8) permettant d'ajuster un débit volumétrique côté entrée (VSE) du produit dans le réservoir d'attente en fonction du niveau de remplissage, dans laquelle
un dispositif permettant de déterminer un débit volumétrique côté sortie (VSA) du produit en provenance du réservoir d'attente est présent et le premier dispositif de régulation est en outre conçu pour réguler le débit volumétrique côté entrée (VSE) à l'intérieur d'au moins une plage de travail (AB) prédéfinie du niveau de remplissage réel (FS) du produit en fonction du débit volumétrique côté sortie (VSA) selon le procédé selon au moins l'une quelconque des revendications précédentes et pour calculer à cet effet une valeur de consigne (VSE') du débit volumétrique côté entrée (VSE) en fonction du niveau de remplissage réel (FS) et du débit volumétrique côté sortie (VSA), dans laquelle l'unité de chauffage de courte durée (4) comprend un deuxième dispositif de régulation (10) permettant une régulation volumétrique de la stérilisation afin de prendre en charge la valeur de consigne (VSE`) calculée du débit volumétrique côté entrée (VSE), en particulier au moyen d'une fonction temporelle de lissage (GF) et de calculer à partir de celle-ci un débit volumétrique de pasteurisation de consigne (VSP`) du produit (2) dans l'unité de chauffage de courte durée.

13. Installation de remplissage selon la revendication 12, dans laquelle le deuxième dispositif de régulation (10) est en outre conçu pour réguler la température de la stérilisation afin de prendre en charge la valeur de consigne (VSE') calculée du débit volumétrique côté entrée (VSE), en particulier au moyen d'une fonction temporelle de lissage (GF), et de calculer à partir de celle-ci une température de pasteurisation de consigne (PT') du produit (2) dans l'unité de chauffage de courte durée.

14. Installation de remplissage selon la revendication 12 ou 13, dans laquelle le dispositif permettant de déterminer le débit volumétrique côté sortie est un contrôleur de débit (9) comprenant un débitmètre (9a) agencé entre le réservoir d'attente (5) et le remplisseur (6).

15. Installation de remplissage selon au moins l'une quelconque des revendications 12 à 14, dans laquelle le réservoir d'attente (5) présente un volume nominal compris entre 5 et 30 m³.
